Europäisches Patentamt

(19) European Patent Office

Office européen des brevets

(11) Publication number: **0 138 265**
**B1**

# EUROPEAN PATENT SPECIFICATION

(45) Date of publication of patent specification: **05.04.89**

(21) Application number: **84201408.6**

(22) Date of filing: **03.10.84**

(51) Int. Cl.⁴: **C 08 J 9/10, C 08 L 23/04,**
**B 29 C 67/22**

(54) **Process for the production of expanded reticulated polyethylene.**

(30) Priority: **14.10.83 IT 2330083**

(43) Date of publication of application:
**24.04.85 Bulletin 85/17**

(45) Publication of the grant of the patent:
**05.04.89 Bulletin 89/14**

(84) Designated Contracting States:
**AT BE CH DE FR GB LI LU NL SE**

(56) References cited:
**DE-A-1 694 373**
**DE-A-1 904 860**
**FR-A-2 372 017**
**GB-A-1 189 505**

(73) Proprietor: **AGIP PETROLI S.p.A.**
**Via Laurentina 449**
**I-00142 Roma (IT)**
(73) Proprietor: **ITALIANA PETROLI S.p.A.**
**Piazza della Vittoria**
**I-16159 Genova (IT)**

(72) Inventor: **Quintavalle, Saverio**
**Via Volontari del Sangue 2**
**I-20097 S.Donato Milanese Milan (IT)**
Inventor: **Gargani, Luciano**
**Via Trieste 16**
**I-20097 S.Donato Milanese Milan (IT)**

(74) Representative: **Roggero, Sergio et al**
**Ing. Barzanò & Zanardo Milano S.p.A. Via**
**Borgonuovo 10**
**I-20121 Milano (IT)**

The file contains technical information
submitted after the application was filed and
not included in this specification

Courier Press, Leamington Spa, England.

**Description**

This invention relates to a process for expanding ethylene polymers into very thick bodies of closed-cell expanded cross-linked polyethylene.

Expanded cross-linked polyethylene has many practical technical applications, such as heat- and acoustic insulation, cushions and floating articles.

According to a known procedure, expanded cross-linked polyethylene is continuously prepared from a blend of polyethylene, a cross-linking agent and a blowing agent, the blend being extruded in a continuous tape form. The tape emerging from the extruder is heated when being conveyed on a conveyor in order to decompose both the cross-linking agent and the blowing agent, whereby a continuous tape of expanded cross-linked polyethylene is obtained.

Such a procedure permits to obtain only comparatively thin expanded cross-linked polyethylene tapes, which may prove unapt to certain uses.

According to GB—A—1,297,197 a blend of polyethylene, a cross-linking agent and a blowing agent is prepared and placed within a closed gastight mould wherein it is heated at a temperature which is higher both than the softening point of polyethylene and than the decomposition temperature of the cross-linking agent and the blowing agent. By so doing, a cross-linked and expanded polyethylene is obtained, but the evolved decomposition gas is dissolved therein: the pressure within the mould is then released by increasing the mould capacity whereby polyethylene can expand and occupies the entire volume of the expanded mould.

According to US—A—3,640,915 polyethylene is subjected, at the outset, to cross-linking so as to raise its softening point and the cross-linked polyethylene is heated to a temperature above the polyethylene softening point under a very high nitrogen pressure to dissolve nitrogen into the molten polymer, whereupon the nitrogen-saturated polymer is expanded by venting off nitrogen.

According to US—A—3,812,225 a blend of the polyolefin, a cross-linking agent and a blowing agent is heated, at the outset, under such conditions as to bring about a preliminary expansion, the pre-expanded material being then cooled and subjected to blowing: such a procedure is both cumbersome and expansive and it very unlikely makes it possible to produce low-apparent-density articles by using commercially acceptable amounts of the blowing agent concerned.

Another prior art approach is that of GB—A—1,189,505, according to which, in order to obtain a cross-linked and expanded polyethylene having satisfactory characteristics, it is imperative to adopt two distinct expansion stages, that is, a primary and secondary expansions, under stringently controlled conditions, since the primary expansion is carried out at a high temperature during the decomposition of the blowing agent and the cross-linking of the polymer must take place before the completion of the primary expansion, whereas the secondary expansion must take place at a temperature lower than that selected for the primary expansion. Now, therefore, in order to offset the drawbacks and shortcomings of the prior art procedures, while providing a simple and economically acceptable process for producing expanded cross-linked polyethylene showing a closed-cell structure wherein the cells are tiny and evenly scattered throughout the polymer mass, said process enabling thick or very thick faultless articles to be produced, which do not require any finishing treatments, the present invention provides a process for preparing bodies of closed-cell, expanded cross-linked polyethylene, characterized in that it comprises the steps of:

— melting a polymer of ethylene selected amongst ethylene homopolymers, copolymers of ethylene with alpha-olefins, copolymers of ethylene with conjugated diolefins and mixtures thereof;

— homogeneously admixing said polymer of ethylene in the molten state with a quantity of from 0,1% to 2,5% by weight of a cross-linking agent and with a quantity of from 2% to 25% by weight of a blowing agent, said cross-linking agent and said blowing agent having a decomposition temperature higher than the melting point of the ethylene polymer concerned, working at a temperature of from 130°C to 150°C and for a time of from 5 min to 10 min;

— extruding the resultant homogeneous mixture into the shape of a solid parallelepiped and subsequent cooling, or imparting said parallelpipedal shape to the mixture by moulding, either the extrusion or the moulding steps being carried out at a temperature of from 130°C to 150°C for a time of from 1 min to 10 min;

— placing the solid parallelepipedal body into an airtight closed container, pressurizing the container interior by a compressed inert gas and heating said shaped body to a temperature higher than the decomposition temperatures of the cross-linking and the blowing agent contained in the body, said temperature being comprised between 170°C and 200°C, under a pressure of from 40 bar to 70 bar for a time of from 20 min to 45 min, with an expansion not higher than 5% by volume relative to the starting volume of the solid parallelepipedal shaped body;

— releasing the pressure in the container in a time of from 0,5 min to 3 min, allowing the body to expand to a final volume smaller than the volume of the container, and withdrawing the expanded cross-linked article from the container.

A suitable ethylene polymer for the process in question is low-density polyethylene, such as that prepared under high pressures in tubular reactors and in the presence of radicalic catalysts. It is

2

recommended that such starting polyethylene be one having a specific gravity of from 0,92 g/ml to 0,925 g/ml.

Another recommendable starting material is an ethylene-propylene copolymer containing from 1% to 2% by weight of propylene, as obtained by Ziegler-polymerization of the two monomers: the preferred specific gravity range for such copolymer is from 0,95 g/ml to 0,96 g/ml.

Still another recommendable starting material is an ethylene-butene-1 copolymer containing from 0,5% to 4% by weight of butene-1, said copolymer being obtained via a Ziegler copolymerization of the two component monomers. Such a copolymer is known as a low-density linear polyethylene, or LLDPE. The recommended specific gravity range for this latter copolymer is from 0,93 g/ml to 0,96 g/ml.

Yet another recommendable starting material is an ethylene-butadiene copolymer containing from 2% to 4% by weight of butadiene, which is prepared by copolymerizing ethylene and butadiene, the suggested specific gravity range being from 0,94 g/ml to 0,95 g/ml.

The above enumerated polymers can be used also admixed together in any desired proportions.

In the reduction of the present invention into practice, the polyethylene concerned, or the selected polyethylene blend concerned, is melted, at the outset, at a temperature comprised between 130°C and 150°C, whereupon the molten (co)polymer is homogeneously admixed with a cross-linking agent and a blowing agent, both agents having a decomposition temperature higher than the melting point of the (co)polymer concerned.

Cross-linking agents which can suitably be used are the organic peroxides, which decompose at a temperature which exceeds the melting point of the polyethylene(s) concerned by at least 10°C, the excess reaching as much as 80°C above the melting point in question. Examples of suitable peroxides are: dicumyl peroxide, 1,3 - bis(tert. - butylperoxy - isopropyl)benzene, tert.butyl cumyl peroxide, 2,5 - dimethyl - 2,5 - di(tert.butylperoxy)hexane and 2,5 - dimethyl - 2,5 - di(tert.butylperoxy)hexyne.

The amount of such peroxide suitable for cross-linking lies within the range of from 0,1% to 2,5% by weight, and preferably from 0,2% to 1,5% by weight, relative to the polyethylene concerned.

In the case of copolymers of ethylene with a conjugated diolefin, it is imperative to use sulphur and a rubber-curing accelerator as the coactive cross-linking agents.

Blowing agents which can suitably be used in the instant process are liquid or solid compounds which decompose with gas evolution at a temperature exceeding the melting point of the polyethylene concerned by at least 5°C, the excess being even as high as 70°C above the melting point considered.

Examples of suitable blowing agents are: azodicarbonamide, p-toluenesulphonylsemicarbazide, p - carboxy - N - nitroso - N - methylbenzamide, N,N' - dinitroso - pentamethylenetetramine, an N - nitroso - N - alkylamide of an aromatic carboxylic acid, trans - N,N' - dinitroso - N,N' - dimethylhexahydroterephthalamide and diphenylsulphone - 3,3' - disulphohydrazide.

The amount of blowing agent required for a satisfactory expansion of polyethylene lies within the range of from 2% to 25% by weight, preferably from 5% to 15% by weight relative to the polyethylene concerned.

Optionally, and additionally to the cross-linking agent and the blowing agent, additives, such as dyestuffs, fillers, lubricants, pigments, and flame-retardants, can be added to and be homogenized with the molten ethylene polymer.

According to an embodiment of the invention, the ethylene polymer is melted in a blender, at a temperature between 130°C and 150°C, whereafter the cross-linking agent and the blowing agent are added thereto, the introduction of other technologically appropriate additives being optionally carried out: a satisfactorily homogeneous blend is obtained within a mixing time of from 5 to 10 minutes.

Temperature and time control should be very accurate during this homogenisation step, to prevent a premature decomposition of the cross-linking agent and the blowing agent.

A premature start of decomposition of the cross-linking agent may produce an irregular cell structure and crater-like cavities may be formed in the core of the article. On the other hand, a premature cross-linking may produce irregularities in the geometrical shape of the solid parallelepiped shaped bodies during the subsequent and cooling or moulding step, and said geometrical irregularity is reflected, and amplified in the end item.

On completion of the homogeneous blending stage, the blend is compression moulded into a regularly shaped parallelepipedal parison or slab: indicatively mould lengths of from 20 cm to 40 cm and mould depths of from 1 cm to 2 cm are suggested. Recommendable moulding conditions are a temperature range 130°C—150°C, a moulding pressure range of 50 bar-80 bar, and a moulding time of from 1 min to 10 min, 5 min as an average value.

Upon cooling, a regular parallelepipedal solid article is obtained, having dimensions equal to those of the mould which has been used.

According to an alternative embodiment, the blending of the molten ethylene polymer, the cross-linking agent and the blowing agent and the possible optionals is carried out in an extruder and solid regular slabs are severed from the cool extrudate. The other blending conditions of interest here, ie temperature and times lie within the ranges specified hereinbefore.

By so doing, virtually no decomposition of the cross-linking agent or the blowing agent takes place, whereby a quite regular parallelepipedal parison is obtained, to be subjected to the expansion stage. A regular geometrical shape for the parison is important in order to achieve a regular expansion, so that it becomes possible to obtain final articles which accurately retain their originally imparted shape and which virtually do not require any finishing treatment. To carry out the expansion stage, the parison is placed in a closed gastight container, such as an autoclave. The parison can be laid on a metallic supporting member placed on the autoclave bottom wall. The autoclave is then closed and pressurized with an inert gas, generally nitrogen, and is heated to a temperature above the decomposition temperature of the cross-linking agent and the blowing agent.

In actual practice, the temperature range is 170°C—200°C, the internal inert gas pressure range being 40 bar-70 bar, and the autoclaving time being from 20 min to 45 min.: by so doing, the ethylene polymer is melted and cross-linked, and contains, dissolved throughout its mass, the gaseous decomposition products evolved by the blowing agent.

Under such conditions, virtually no pre-expansion takes place and, if any occurs, it never exceeds 5% of the original volume of the parison.

On completion of autoclaving under pressure, the pressure is released until atmospherical pressure is attained and the expansion stage takes place. It has been found that the autoclave depressurizing time is important, the best results being obtained whenever the time taken to reach atmospherical pressure values is from 0,5 min to 3 min.

It is likewise important that the autoclave capacity is greater than the volume of the final expanded polyethylene article and the autoclave shape is such as to prevent any contacts of the article being expanded with the autoclave inner wall: quite surprisingly, a "free expansion" takes place, which produces geometrically regular articles.

By the procedure outlined above, it is possible to obtain, for example, finished plates having a size of 50 cm-60 cm, and a thickness of from 3 cm to 5 cm. Articles of different size can, of course, be obtained, consistently with the processing conditions selected.

The expanded cross-linked polyethylene articles thus obtained have a closed-cell structure: the average cell size range is 0,2 mm-0,4 mm, said cells being evenly scattered throughout the entire article mass, so that subsequent finishing treatments can be minimized or even dispensed with. The apparent density, or volume mass, of the expanded articles typically lies within the range 40 kg/m$^3$-45 kg/m$^3$: it is, of course, possible to obtain higher or lower volume mass values by properly selecting the processing parameters. The stiffness of the cellular articles obtained by the process of this invention may vary from 284,39 kPa to 980,66 kPa (2,9 kg/cm$^2$ to 10 kg/cm$^2$), mainly according to the type of ethylene polymer concerned.

Exemplary technical uses for the cellular materials produced according to the invention are heat-insulating liners, vapour barriers in the building industry, floating pipes. The buoyancy due to the closed-cell structure and the water-repellent nature of the cellular polyethylene articles referred to above, as well as their poor permeability to water and steam and thermoformability, suggest their adoption for manufacturing insulating pipes.

The invention will be more detailedly explained in the following practical Examples.

Example 1

600 of linear low density polyethylene (LLDPE), consisting of a copolymer of ethylene with butene-1, containing 3% by weight of butene-1, and having a specific gravity of 0.94 g/ml and melt index of 0.3 g/10′, are molten at a temperature of 135°C.

To the molten ethylene polymer are added, in the following order:
— Stearic acid, 3 g
— Zinc oxide, 12 g
— Perkadox 14/40′ (Trade Mark) (1,3-bis(tert.-butylperoxy-isopropyl)-benzene at 40% by weight supported on CaCO$_3$; commercial product by the firm AKZO), 3 g
— Genitron AC 4 (Trade Mark) (azodicarbonamide, commercial product by the firm ICI), 48 g

These ingredients are incorporated within the molten polymer batch and are homogenized in a time of about 8 minutes. The so obtained mixture is compression moulded in a 20×20 cm mould, with 1.5 cm thickness, at 135°C, for 5 minutes, under a pressure of about 50 bar. After the time said has elapsed, the polymer mass is cooled down to room temperature, with a cooling rate of 20°C per minute. A solid and regular slab is thus obtained, having the dimensions of the mould.

This slab is then placed on a metallic support on the bottom of an air-tight autoclave, whose inner chamber has dimensions of 60×60 cm, and height of 20 cm. The slab is heated at 180°C, for a time of 30 minutes, under a nitrogen pressure of about 55 bar.

At the end of the said time period, the pressure is released, down to the atmospheric value, in a time of 1 minute, and a sheet of expanded material is extracted from the autoclave, with dimensions 55×55 cm, and thickness 4,1 cm.

The expanded sheet so obtained has closed cells, evenly distributed throughout its whole volume, the largeness of the cells being of 0.2—0.4 mm. The expanded matter has a specific gravity of about 40 kg/m$^3$ and a stiffness of 686.46 kPa (7 kg/cm$^2$).

The sheet has a regular shape, and is free from superficial faults.

4

**Example 2**

The process is carried out as in Example 1, homogenizing: linear low density polyethylene (LLDPE; copolymer of ethylene with 3% by weight of butene-1, specific gravity 0.94 g/ml and melt index 0.92 g/10′) (100 parts by weight), stearic acid (0.5 parts by weight), zinc oxide (2.0 parts by weight), Perkadox 14/40′ (0.75 parts by weight), Genitron AC4 (8 parts by weight).

By operating as in Example 1, a sheet of expanded reticulated polyethylene is obtained, with dimensions 55×55 cm, thickness 4.1 cm, specific gravity of about 43 kg/m$^3$ and stiffness 686.46 kPa (7 kg/cm$^2$). The sheet is regular and without faults. The closed cells of the expanded sheet have dimensions of the order of 0.2—0.4 mm.

**Example 3**

The process is carried out as in Example 2, using a linear low density polyethylene (LLDPE), copolymer of ethylene with 4% by weight of butene-1, having a specific gravity of 0.93 g/ml and a melt index of 0.42 g/10′.

An expanded reticulated polyethylene sheet is obtained, with dimensions 55×55 cm, thickness 4.1 cm, specific gravity about 43 kg/m$^3$ and stiffness 353.04 kPa (3.6 kg/cm$^2$).

The sheet is regular and free from superficial faults. The dimensions of the closed cells of the expanded sheet are of the order of 0.2—0.4 mm.

**Example 4**

The process is carried out as in Example 1, homogenizing: low density polyethylene (outcoming from a high pressure polymerization process), having a specific gravity 0.92 g/ml and melt index 0.3 g/10′ (100 parts by weight), Perkadox 14/40′ (1.5 parts by weight) and Genitron AC4 (8 parts by weight).

A sheet of expanded reticulated polyethylene is obtained, with dimensions 55×55 cm, thickness 4.1 cm, specific gravity about 40 kg/m$^3$ and stiffness 284.40 kPa (2.9 kg/cm$^2$). The sheet has a regular shape and is free from superficial faults. The closed cells of the expanded sheet have dimensions of the magnitude of 0.2—0.4 mm.

**Example 5**

The process is carried out as in Example 1, using an ethylene-butene-1 copolymer, having specific gravity 0.955 g/ml and melt index 0.3 g/10′.

A sheet is obtained of expanded reticulated polyethylene, with dimensions 55×55 cm, thickness 4.1 cm, specific gravity about 40 kg/m$^3$ and stiffness 980.66 kPa 10 kg/cm$^2$. The sheet has a regular shape and is free from superficial faults. The closed cells of the expanded sheet have dimensions of the order of 0.2—0.4 mm.

**Example 6**

The process is carried out as in Example 1, homogenizing: linear low density polyethylene (LLDPE, copolymer of ethylene with 3% by weight of butene-1, of specific gravity of 0.94 g/ml and melt index of 0.3 g/10′ (100 parts by weight), stearic acid (0.5 parts by weight), zinc oxide (20 parts by weight), Perkadox 14/40′ (0.75 parts by weight) and Celogenra (Trade Mark) (p-toluenesulphonilsemicarbazide, commercial product by the firm UNIROYAL), (13.5 parts by weight).

A sheet is obtained of expanded reticulated polyethylene, with dimensions 55×55 cm, thickness 4.1 cm, specific gravity about 45 kg/m$^3$ and stiffness 686.46 kPa (7 kg/cm$^2$). The sheet has a regular shape and is free from superficial faults. The closed cells of the expanded sheet have dimensions of the magnitude 0.2—0.4 mm.

**Example 7**

The process is carried out as in Example 6, using linear low density polyethylene (LLDPE, copolymer of ethylene with 4% by weight of butene-1), having a specific gravity of 0.93 g/ml and a melt index of 0.42 g/10′.

A sheet is obtained of expanded reticulated polyethylene, with dimensions 55×55 cm, thickness 4.1 cm, specific gravity about 43 kg/m$^3$ and stiffness 392.26 kPa (4.0 kg/cm$^2$). The sheet is regular and free from superficial faults. The closed cells of the expanded sheet have dimensions of the order of 0.2—0.4 mm.

**Example 8**

The process is carried out as in Example 1, homogenizing at 145°C an ethylene-butadiene copolymer, with 4% by weight of butadiene, with a density of 0.945 g/ml and melt index of 0.3 g/10′.

A sheet of expanded reticulated polyethylene is obtained, with dimensions 55×55 cm, thickness 4 cm, specific gravity about 40 kg/m$^3$ and stiffness 784.53 kPa (8 kg/cm$^2$).

The sheet is of regular shape, and free from superficial faults. The closed cells of the expanded sheet have dimensions of the magnitude of 0.2—0.4 mm.

**Example 9**

The process is carried out as in preceding Example 8, homogenizing the ethylene-butadiene copolymer with stearic acid (1 part by weight), zinc oxide (5 parts by weight), sulphur (3 parts by weight), N-oxydiethylbenzothiazole - 2 - sulphenamide (commerical product NABS Special (Trade Mark) by the firm American Cyanamid) (1.5% by weight), benzothiazyl disulphide (commercial product Vulkacit DM (Trade Mark), by the firm Bayer) (0.5% by weight) per 100 parts by weight of copolymer. A sheet of expanded reticulated polyethylene is obtained, with dimensions 55×55 cm, thickness 4 cm, specific gravity about 40 kg/m³ and stiffness 392.26 kPa (4 kg/cm²).

The sheet is free from superficial faults. The closed cells of the expanded sheet have dimensions of 0.2—0.4 mm.

Example 10

Results similar to those of the preceding Example are obtained by using equal quantities of tetramethylthiuram disulphide (commercial product Vulkacit Thiuram (Trade Mark), by the firm Bayer) and 2-mercaptobenzothiazole (commercial product Vulkacit Mercapto (Trade Mark), by the firm Bayer) instead of N-oxydiethylbenzothiazole - 2 - sulphenamide and benzothiazyl disulphide respectively.

Example 11

The process is carried out as in Example 1, using an ethylene-propylene copolymer, containing 1% by weight of propylene, with density 0.96 g/ml and melt index 0.3 g/10'. The homogenization of the copolymer with the ingredients is carried out at 145°C.

An expanded reticulated polyethylene is obtained, with dimensions 55×55 cm, thickness 4 cm, specific gravity about 40 kg/m³ and stiffness 980.66 kPa (10 kg/cm²). The sheet is free from superficial faults. The closed cells of the expanded sheet have dimensions of 0.2—0.4 mm.

**Claims**

1. Process for preparing bodies of closed-cell, expanded cross-linked polyethylene, characterized in that it comprises the steps of:
— melting a polymer of ethylene selected amongst ethylene homopolymers, copolymers of ethylene with alpha-olefins, copolymers of ethylene with conjugated diolefins and mixtures thereof;
— homogeneously admixing said polymer of ethylene in the molten state with a quantity of from 0,1% to 2,5% by weight of a cross-linking agent and with a quantity of from 2% to 25% by weight of a blowing agent, said cross-linking agent and said blowing agent having a decomposition temperature higher than the melting point of the ethylene polymer concerned, working at a temperature of from 130°C to 150°C and for a time of from 5 min to 10 min;
— extruding the resultant homogeneous mixture into the shape of a solid parallelepiped and subsequent cooling, or imparting said parallelepipedal shape to the mixture by moulding, either the extrusion or the moulding steps being carried out at a temperature of from 130°C to 150°C for a time of from 1 min to 10 min;
— placing the solid parallelepipedal body into an airtight closed container, pressurizing the container interior by an inert gas and heating said shaped body to a temperature higher than the decomposition temperatures of the cross-linking and the blowing agent contained in the body, said temperature being comprised between 170°C and 200°C, under a pressure of from 40 bar to 70 bar for a time of from 20 min to 45 min, with an expansion not higher than 5% by volume relative to the starting volume of the solid parallelepipedal shaped body;
— releasing the pressure in the container in a time of from 0,5 min to 3 min, allowing the body to expand to a final volume smaller than the volume of the container, and withdrawing the expanded cross-linked article from the container.

2. Process according to claim 1, wherein said ethylene polymer is a low-density ethylene polymer having a specific gravity of from 0,92 g/ml to 0,925 g/ml.

3. Process according to claim 1, wherein said ethylene polymer is an ethylene-butene-1 copolymer with a butene-1 content of from 0,5% to 4% by weight and a specific gravity of from 0,93 g/ml to 0,96 g/ml.

4. Process according to claim 1, wherein said ethylene polymer is an ethylene-propylene copolymer with a propylene content of from 1% to 2% by weight and a specific gravity of from 0,95 g/ml to 0,96 g/ml.

5. Process according to claim 1, wherein said ethylene polymer is an ethylene-butadiene copolymer with a content of butadiene of from 2% to 4% by weight and a specific gravity of from 0,94 g/ml to 0,95 g/ml.

6. Process according to claim 1, wherein the cross-linking agent has a decomposition temperature which is higher than the melting point of the polyethylene by from 10°C to 80°C.

7. Process according to claim 1, wherein the cross-linking agent is selected amongst 1,3 - bis - (tert.butylperoxyisopropyl)benzene dicumyl peroxide, tert.butylcumylperoxide, 2,5 - dimethyl - 2,5 - di(tert.butylperoxy)hexane, and 2,5 - dimethyl - 2,5 - di(tert.butylperoxy)hexyne.

8. Process according to claim 1, wherein the cross-linking agent is used in an amount of from 0,2% to 1,5% by weight relative to the ethylene polymer.

9. Process according to claim 1, wherein the ethylene polymer is an ethylene-butadiene copolymer and the cross-linking agent is sulphur and a rubber-curing accelerator.

10. Process according to claim 1, wherein the blowing agent has a decomposition temperature which is higher than the melting point of the ethylene polymer by from 5°C to 70°C.

11. Process according to claim 1, wherein the blowing agent is selected amongst: azodicarbonamide, p - toluenesulphonylsemicarbazide, p - carboxy - N - nitroso - N - methylbenzamide, N,N' - dinitroso - pentamethylenetetramine, an N - nitroso - N - alkylamide of an aromatic carboxyl acid, trans - N,N' - dinitroso - N,N' - dimethylhexahydroterephthalamide, N,N' - dinitroso - N,N' - dimethylterephthalamide and diphenylsulphone - 3,3' - disulphohydrazide.

12. Process according to claim 1, wherein said blowing agent is used in a quantity of from 5% to 15% by weight relative to the ethylene polymer.

13. Process according to claim 1, wherein the ethylene polymer is homogeneously admixed also with an additive selected amongst dyestuffs, fillers, lubricants, pigments and flame-retardants.


**Patentansprüche**

1. Verfahren zur Herstellung von Körpern aus geschlossenzelligem, expandiertem, vernetztem Polyethylen, dadurch gekennzeichnet, daß es die Schritte:
— Schmelzen eines Ethylenpolymers, ausgewählt unter Ethylenhomopolymeren, Copolymeren des Ethylens mit alpha-Olefinen, Copolymeren des Ethylens mit konjugierten Diolefinen und Gemischen hievon;
— Homogenes Vermischen des genannten Ethylenpolymeres im geschmolzenen Zustand mit einer Menge von 0,1 Gew.-% bis 2,5 Gew.-% eines Vernetzungsmittels und mit einer Menge von 2 Gew.-% bis 25 Gew.-% eines Treibmittels, wobei das genannte Vernetzungsmittel und das genannte Treibmittel eine Zersetzungstemperatur besitzen, die höher als der Schmelzpunkt des betreffenden Ethylenpolymers ist, wobei bei einer Temperatur von 130°C bis 150°C und während einer Zeit von 5 min bis 10 min gearbeitet wird;
— Extrudieren des resultierenden homogenen Gemisches in die Form eines festen Parallelepipeds und darauffolgendes Abkühlen, oder Übertragen der genannten parallelepipedalen Form auf das Gemisch durch Formgebung, wobei sowohl die Extrusion als auch die Formgebungsschritte bei einer Temperatur von 130°C bis 150°C während einer Zeit von 1 min bis 10 min durchgeführt werden;
— Stellen des festen parallelepipedalen Körpers in einen luftdicht verschlossenen Behälter, Unter-Druck-Setzen des Behälterinneren durch ein Inertgas und Erhitzen des genannten geformten Körpers auf eine Temperatur, die höher als die Zersetzungstemperaturen des im Körper enthaltenen Vernetzungs- und des im Körper enthaltenen Treibmittels ist, wobei die genannte Temperatur von 170°C bis 200°C umfaßt, unter einem Druck von 40 bar bis 70 bar während einer Zeit von 20 min bis 45 min, mit einer Expansion, die nicht mehr als 5 Vol.-%, bezogen auf das Ausgangsvolumen des festen parallelepipedal geformten Körpers, beträgt;
— Ablassen des Druckes aus dem Behälter in einer Zeit von 0,5 bis 3 min, wobei dem Körper ermöglicht wird, auf ein Endvolumen, das kleiner als das Volumen des Behälters ist, zu expandieren, und Entfernen des expandierten vernetzten Gegenstandes aus dem Behälter; umfaßt.

2. Verfahren nach Anspruch 1, worin das genannte Ethylenpolymer ein Ethylenpolymer mit niedriger Dichte ist, mit einem spezifischen Gewicht von 0,92 g/ml bis 0,925 g/ml.

3. Verfahren nach Anspruch 1, worin das genannte Ethylenpolymer ein Ethylen/Buten-1-Copolymer mit einem Buten-1-Gehalt von 0,5 Gew.-% bis 4 Gew.-% und einem spezifischen Gewicht von 0,93 g/ml bis 0,96 g/ml ist.

4. Verfahren nach Anspruch 1, worin das genannte Ethylenpolymer ein Ethylen/Propylen-Copolymer mit einem Propylengehalt von 1 Gew.-% bis 2 Gew.-% und einem spezifischen Gewicht von 0,95 g/ml bis 0,96 g/ml ist.

5. Verfahren nach Anspruch 1, worin das genannte Ethylenpolymer ein Ethylen/Butadien-Copolymer mit einem Gehalt an Butadien von 2 Gew.-% bis 4 Gew.-% und einem spezifischen Gewicht von 0,94 g/ml bis 0,95 g/ml ist.

6. Verfahren nach Anspruch 1, worin das Vernetzungsmittel eine Zersetzungstemperatur besitzt, die um 10°C bis 80°C höher als der Schmelzpunkt des Polyethylens ist.

7. Verfahren nach Anspruch 1, worin das Vernetzungsmittel ausgewählt ist unter 1,3 - Bis - (tert. - butylperoxyisopropyl)benzoldicumylperoxid, tert.-Butylcumylperoxid, 2,5 - Dimethyl - 2,5 - di(tert.butylperoxy)hexan und 2,5 - Di - methyl - 2,5 - di(tert. - butylperoxy)hexin.

8. Verfahren nach Anspruch 1, worin das Vernetzungsmittel in einer Menge von 0,2 Gew.-% bis 1,5 Gew.-%, bezogen auf das Ethylenpolymer, verwendet wird.

9. Verfahren nach Anspruch 1, worin das Ethylenpolymer ein Ethylen/Butadien-Copolymer ist und das Vernetzungsmittel Schwefel und ein Beschleuniger für die Kautschukvulkanisierung ist.

10. Verfahren nach Anspruch 1, worin das Treibmittel eine Zersetzungstemperatur besitzt, die um 5°C bis 70°C höher als der Schmelzpunkt des Ethylenpolymers ist.

11. Verfahren nach Anspruch 1, worin das Treibmittel ausgewählt ist unter Azodicarbonamid, p - Toluolsulfonylsemicarbazid, p - Carboxy - N - nitroso - N - methylbenzamid, N,N' - Dinitroso - pentamethylentetramin, einem N - Nitroso - N - alkylamid einer aromatischen Carbonsäure, trans - N,N' - Dinitroso - N,N' - dimethylhexahydroterephthalamid, N,N' - Dinitroso - N,N' - dimethylterephthalamid und Diphenylsulfon - 3,3' - disulfohydrazid.

12. Verfahren nach Anspruch 1, worin das genannte Treibmittel in einer Menge von 5 Gew.-% bis 15 Gew.-% bezogen auf das Ethylenpolymer, verwendet wird.

13. Verfahren nach Anspruch 1, worin das Ethylenpolymer auch mit einem Additiv, ausgewählt unter Farb-, Füllstoffen, Schmiermitteln, Pigmenten und Flammhemmern, homogen vermischt wird.

**Revendications**

1. Procédé de préparation de corps en polyéthylène réticulé et expansé, à cellules fermées, caractérisé en ce qu'il comprend les étapes consistant à:
— faire fondre un polymère d'éthylène choisi parmi les homopolymères de l'éthylène, les copolymères de l'éthylène avec des alpha-oléfines, les copolymères de l'éthylène avec des dioléfines conjuguées, et leurs mélanges;
— mélanger de façon homogène, audit polymère d'éthylène à l'état fondu, une quantité de 0,1% à 2,5% en poids d'un agent de réticulation et une quantité de 2% à 25% en poids d'un agent porogène, ledit agent de réticulation et ledit agent porogène ayant une température de décomposition supérieure au point de fusion du polymère d'éthylène concerné, en opérant à une température de 130°C à 150°C et pendant une durée de 5 minutes à 10 minutes;
— extruder le mélange homogène résultant en lui donnant la forme d'un parallélépipède solide et le refroidir ensuite, ou donner au mélange ladite forme parallélépipédique par moulage, l'étape d'extrusion ou l'étape de moulage étant effectuée à une température de 130°C à 150°C pendant une durée de 1 minute à 10 minutes;
— placer le corps solide parallélépipédique dans un récipient fermé étanche à l'air, pressuriser l'intérieur du récipient à l'aide d'un gaz inerte et chauffer ledit corps mis en forme, à une température supérieure à la température de décomposition de l'agent de réticulation et de l'agent porogène contenu dans le corps, ladite température étant comprise entre 170°C et 200°C, sous une pression de 40 bars à 70 bars, pendant une durée de 20 minutes à 45 minutes, l'expansion n'étant pas supérieure à 5% en volume par rapport au volume initial du corps solide mis sous forme parallélépipédique;
— relâcher la pression dans le récipient en une durée de 0,5 minute à 3 minutes, permettre au corps de s'expanser jusqu'à un volume final plus petit que le volume du récipient, et retirer l'article expansé réticulé du récipient.

2. Procédé conforme à la revendication 1, dans lequel ledit polymère d'éthylène est un polymère d'éthylène à basse densité, présentant une masse volumique de 0,92 g/ml à 0,925 g/ml.

3. Procédé conforme à la revendication 1, dans lequel ledit polymère d'éthylène est un copolymère éthylène-butène-1, présentant une teneur en butène-1 de 0,5% à 4% en poids et une masse volumique de 0,93 g/ml à 0,96 g/ml.

4. Procédé conforme à la revendication 1, dans lequel ledit polymère d'éthylène est un copolymère éthylène-propylène, présentant une teneur en propylène de 1% à 2% en poids et une masse volumique de 0,95 g/ml à 0,96 g/ml.

5. Procédé conforme à la revendication 1, dans lequel ledit polymère d'éthylène est un copolymère éthylène-butadiène, présentant une teneur en butadiène de 2% à 4% en poids et une masse volumique de 0,94 g/ml à 0,95 g/ml.

6. Procédé conforme à la revendication 1, dans lequel l'agent de réticulation présente une température de décomposition qui est supérieure de 10°C à 80°C au point de fusion du polymère d'éthylène.

7. Procédé conforme à la revendication 1, dans lequel l'agent de réticulation est choisi parmi le 1,3 - bis - (tert.butylperoxyisopropyl)benzène, le peroxyde de dicumyle, le peroxyde de tert.butyle et de cumyle, le 2,5 - diméthyl - 2,5 - di - (tert.butylperoxy)hexane, et le 2,5 - diméthyl - 2,5 - di(tert.butylperoxy)hexyne.

8. Procédé conforme à la revendication 1, dans lequel l'agent de réticulation est utilisé en une quantité de 0,2% à 1,5% en poids par rapport au polymère d'éthylène.

9. Procédé conforme à la revendication 1, dans lequel le polymère d'éthylène est un copolymère éthylène-butadiène, et l'agent de réticulation est constitué de soufre et d'un accélérateur de durcissement de caoutchouc.

10. Procédé conforme à la revendication 1, dans lequel l'agent porogène présente une température de décomposition qui est supérieure de 5°C à 70°C au point de fusion du polymère d'éthylène.

11. Procédé conforme à la revendication 1, dans lequel l'agent porogène est choisi parmi: l'azodicarbonamide, le p - toluènesulfonylsemicarbazide, le p - carboxy - N - nitroso - N - méthyl-benzamide, le N,N' - dinitroso - pentaméthylènetétramine, un N - nitroso - N - alkylamide d'un acide carboxylique aromatique, le trans - N,N' - dinitroso - N,N' - diméthylhexahydrotéréphtalamide, le N,N' - dinitroso - N,N' - diméthyltéréphtalamide et le diphénylsulfone - 3,3' - disulfohydrazide.

12. Procédé conforme à la revendication 1, dans lequel ledit agent porogène est utilisé en une quantité de 5% à 15% en poids par rapport au polymère d'éthylène.

13. Procédé conforme à la revendication 1, dans lequel on ajoute et mélange aussi de façon homogène, au polymère d'éthylène, un additif choisi parmi les colorants, charges, lubrifiants, pigments et agents ignifuges.